# EUROPÄISCHE PATENTSCHRIFT

(11) **EP 0 578 967 B1**
(45) Veröffentlichungstag und Bekanntmachung des Hinweises auf die Patenterteilung: **16.10.1996**
(21) Anmeldenummer: 93109172.2
(22) Anmeldetag: 08.06.1993
(51) Int. Cl.: B41F 27/12, F16D 1/10

(54) **Einrichtung zum Übertragen von Spannkräften auf Spannwellen in Druckwerkzylindern**
Device for transmitting tension forces to tension shafts in printing unit cylinders
Dispositif pour transmettre des efforts de tension aux axes de tension dans des cylindres d'un groupe imprimant

(30) Priorität: 27.06.1992 DE 4221133
(43) Veröffentlichungstag der Anmeldung: 19.01.1994
(73) Patentinhaber: Heidelberger Druckmaschinen Aktiengesellschaft, D-69019 Heidelberg (DE)
(72) Erfinder: Junghans, Rudi, W-6916 Wilhelmsfeld (DE)
(74) Vertreter: Stoltenberg, Heinz-Herbert Baldo

(56) Entgegenhaltungen:
- DE-A- 3 717 692
- DE-B- 1 119 877
- DE-C- 914 690
- GB-A- 618 534
- US-A- 2 850 970
- US-A- 3 290 918
- US-A- 4 433 767

## Beschreibung

Die Erfindung bezieht sich auf eine Einrichtung zum Übertragen von Spannkräften auf Spannwellen in Druckwerkzylindern, insbesondere an Rotationsdruckmaschinen, deren Druckwerkzylinder flächige, flexible Aufzüge führen, wobei deren Vorder- oder Hinterkanten in einer sich über die Breite des Druckwerkzylinders erstreckenden Öffnung für eine Spannwelle aufgenommen sind.

Der Stand der Technik, DE-PS 12 79 689 offenbart eine Vorrichtung zum Verriegeln der Spannstange eines Walzenbelages, insbesondere des Druckzylinderaufzuges von Buchdruckmaschinen. Auf einer Spannstange ist ein Umschalter aufgenommen, der eine um einen Zapfen drehbare Sperrklinke umfaßt. Die mit einer Federkraft beaufschlagte Sperrklinke greift in ein Schaltrad ein, welches die Position der Spannstange festlegt und einen Belag auf einem Druckwerkkörper spannt oder entspannt. Die Höhe des Haltemomentes, welches diese Einrichtung übertragen und aufrechterhalten kann, ist jedoch begrenzt.

Der DE-PS 10 75 635 ist eine Vorrichtung zum Spannen des Aufzuges auf Druckzylindern zu entnehmen. An der Stirnseite eines Druckzylinders ist auf einer Spannstange ein Schneckenrad befestigt, welches mit einer Schnecke zusammenarbeitet, die in einem Gehäuse untergebracht ist. Das Schneckenrad sitzt auf einer Spannstange, welche sowohl Vorder- als auch Hinterkante eines Aufzuges aufnimmt. Die Auswechselbarkeit des Schneckenrades ist bei dieser Vorrichtung nicht gegeben.

Der Erfindung liegt die Aufgabe zugrunde, eine Einrichtung zum Übertragen von Spannkräften an Druckwerkzylindern derart zu optimieren, daß hohe Drehmomente übertragbar sind und eine Demontage unter minimalem Platzbedarf realisierbar ist.

Erfindungsgemäß wird diese Aufgabe durch die Merkmale des Patentanspruches 1 gelöst.

Die mit dieser Lösung erzielbaren Vorteile liegen darin, daß bei beengten Platzverhältnissen ein Auswechseln des Verstellrades durch Abziehen desselben vom Zapfen der Spannwelle möglich ist. Ferner ist diese Kupplung zwischen Verstellrad als Außenteil und Zapfen der Spannwelle als Innenteil einfach und preiswert herzustellen und in der Lage, hohe Drehmomente zu übertragen, da die Übertragung des Drehmomentes und damit die Spannung des Zylinderaufzuges durch mehrere Tragkörper gewährleistet ist. Weiterhin ist durch die Verwendung mehrerer Tragkörper eine höhere Redundanz gegeben, was die Betriebssicherheit erhöht.

In weiterer Ausgestaltung des der Erfindung zugrunde liegenden Gedanken, sind am Umfang des Zapfens die Ausnehmungen jeweils gleicher Abmessungen bezogen auf die Symmetrieachse des Zapfens einander gegenüberliegend angeordnet. Dadurch wird die Montageposition des Verstellrades auf dem Zapfen fixiert. Außerdem erstrecken sich in der Bohrung des Verstellrades Aufnahmeöffnungen für Tragkörper bis an die zapfenseitige Stirnseite des Verstellrades. Damit steht eine ausreichende Kraftübertragungsfläche zur Verfügung, ohne daß Scherbeanspruchungen und Hertz'sche Pressungen die Lebensdauer der Bauteile nachteilig beeinflussen; die mechanischen Bauteilbeanspruchungen sind deutlich herabgesetzt. Neben einer Ausführung der Tragkörper als Zylinderstifte können diese auch als Paßfedern ausgeführt werden.

Die als Zylinderstifte ausgeführten Tragkörper sind in die Aufnahmeöffnungen des auswechselbaren Verstellrades eingeklebt, was eine einfachere Handhabung bei Montage und Demontage erlaubt.

Anhand der Zeichnung wird die Erfindung nun im folgenden eingehend erläutert.

Es zeigt:
- Fig. 1: einen Längsschnitt durch einen Druckwerkzylinder im stirnseitigen Bereich,
- Fig. 2: eine formschlüssige Verbindung von Verstellrad und Zapfen einer Spannwelle,
- Fig. 3: eine Seitenansicht des Verstellrades,
- Fig. 4: einen Längsschnitt durch das Verstellrad,
- Fig. 5: eine Draufsicht auf den Zapfen einer Spannwelle und
- Fig. 6: eine Seitenansicht von Spannwelle und Zapfen

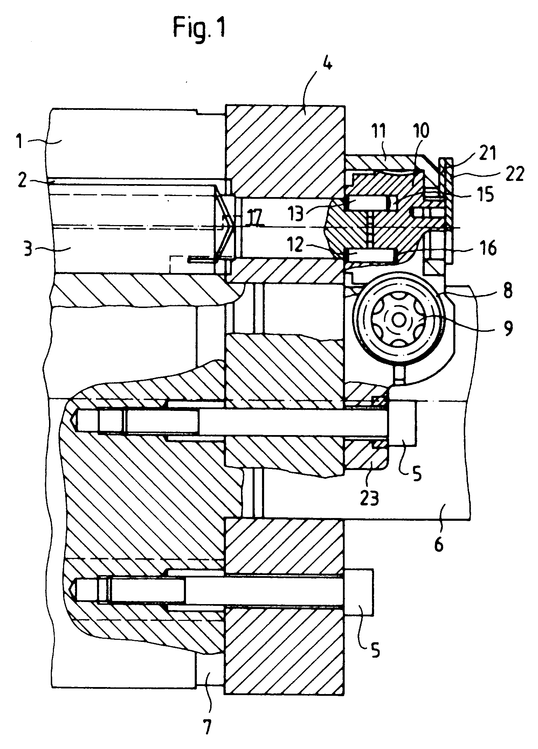

In Fig. 1 ist im Längsschnitt ein stirnseitiger Bereich eines Druckwerkzylinders 1 dargestellt.

In einem Zylinder 1 eines Druckwerkes befindet sich eine Axialbohrung 2, in der eine Spannwelle 3 aufgenommen ist. In dieser werden Vorder- und Hinterkante eines Aufzuges aufgenommen und auf die Mantelfläche des Zylinders 1 gespannt. An der Stirnseite des Zylinders 1 ist ein Schmitzring 4 mittels Schrauben 5 befestigt, von denen eine gleichzeitig ein Lagerteil 23 fixiert. Zwischen Schmitzring 4 und der Oberfläche des Zylinders 1, die vom Aufzug überdeckt wird, befindet sich ein eingedrehter Absatz 7.

Vom Lagerteil 23 wird eine Schnecke 8 aufgenommen, welche durch ein Ansatzstück 9 verdreht werden kann. Das Ansatzstück kann zum einen - wie in Fig. 1 dargestellt - als ein Mehrkeilprofil ausgebildet sein, es wären aber auch ein Schraubenkopf in gängiger Schlüsselweite oder ähnliche formschlüssige Betätigungselemente einsetzbar. Die Schnecke 8 kämmt mit einem auswechselbaren Verstellrad 10, welches als ein Schneckenrad ausgeführt ist. Das auswechselbare Verstellrad 10 ist im Gehäuse 11 des Lagerteiles 23 untergebracht. Im auswechselbaren Verstellrad 10 sind in dem einem Zapfen 17 gegenüberliegenden Bereich am Umfang einer Bohrung Aufnahmeöffnungen 15 und 16 vorgesehen. In diese Aufnahmeöffnungen 15 und 16 greifen Tragkörper 12 und 13 mit unterschiedlichen Abmessungen ein. Die Tragkörper 12 und 13 können beispielsweise als Zylinderstifte ausgeführt sein und sind in die Aufnahmeöffnungen 15 und 16 der Bohrung im auswechselbaren Verstellrad 10 eingeklebt. Die Tragkörper 12 und 13 wiederum greifen in Ausnehmungen 18 und 19 eines Zapfens 17 der Spannwelle 3 und stellen somit eine formschlüssige Kupplung zwischen dem auswechselbaren Verstellrad 10 und des Zapfen 17 der Spannwelle 3 her.

Wie Fig. 1 weiterhin entnommen werden kann, sind die Tragkörper 12 und 13 etwa je zur Hälfte von den Aufnahmeöffungen 15 und 16 des auswechselbaren Verstellrades 10 einerseits und den Ausnehmungen 18 und 19 auf dem Umfang des Zapfens 17 der Spannwelle 3 andererseits, aufgenommen. Zur Demontage ist daher eine axiale Verschiebung des auswechselbaren Verstellrades 10 nur um wenige Millimeter erforderlich, was eine erhebliche Vereinfachung darstellt. Neben einer einfachen Demontage eröffnet der Schneckentrieb durch seine Selbsthemmung ein Beibehalten einer einmal vorgenommen Einstellung. Dadurch, daß zwischen auswechselbarem Verstellrad 10 und dem Zapfen 17 mehrere Tragkörper 12 und 13 aufgenommen sind, können große Kräfte zum Spannen übertragen und aufrechterhalten werden. Bei Verdrehung der Schnecke 8 über ein am Aufsatzstück 9 angreifendes Werkzeug erfolgt eine Verdrehung des auswechselbaren Verstellrades 10 und damit auch von Zapfen 17. Der Kraftfluß erfolgt vom auswechselbaren Verstellrad 10 über die in den Aufnahmeöffnungen 15 und 16 eingeklebten Tragkörper 12 und 13, die in Ausnehmungen 18 und 19 am Umfang des Zapfens 17 eingreifen und der Spannwelle 3 eine Verdrehung aufzwingen.

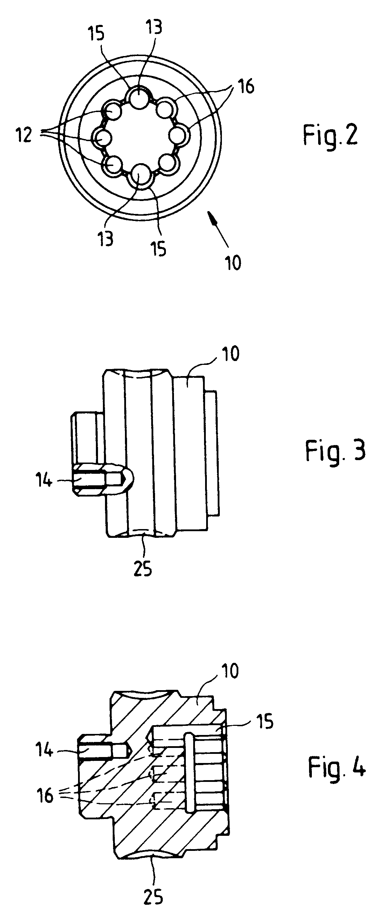

Fig. 2 zeigt eine formschlüssige Verbindung von Verstellrad und Zapfen einer Spannwelle.

Einander gegenüberliegend sind zwei verdickt ausgeführte Tragkörper 13 in Aufnahmeöffnungen 15 einer Bohrung im auswechselbaren Verstellrad 10 eingeklebt. Zwischen den Tragkörpern 13 sind am Umfang der Bohrung im auswechselbaren Verstellrad 10 mehrere Tragkörper 12 eingeklebt, die schlanker ausgeführt sind, als die bereits erwähnten Tragkörper 13. Die Tragkörper 12 sind ebenfalls in den Aufnahmeöffnungen 16 der Bohrung im auswechselbaren Verstellrad 10 eingeklebt. Die Tragkörper 12, 13 sind hier als Zylinderstifte mit verschiedenen Durchmessern ausgeführt. Die die Tragkörper 13 bildenden Zylinderstifte mit den größeren Durchmessern dienen zur Fixierung des Verstellrades 10 auf der Spannwelle 3. Bei zwei um 180° zueinander versetzten Tragkörpern 13 mit stärkerem Durchmesser ist auch eine spiegelbildliche Montage des Verstellrades 10 möglich. Denkbar wären in diesem Zusammenhang auch um 60° oder um 90° zueinander versetzte Anordnungen der Tragkörper 13. Durch das Eingreifen der Tragkörper 12 und 13 in die Ausnehmungen 18 und 19 des Zapfens 17 wird bei Verdrehung des auswechselbaren Verstellrades 10 durch die Rotation der Schnecke 8 die Spannkraft in die Spannwelle 3 eingeleitet.

Fig. 3 zeigt eine Seitenansicht des Verstellrades. Im auswechselbaren Verstellrad 10 ist eine Verzahnung 25 ausgeführt, so daß eine Verdrehung und eine Selbsthemmung über die Schnecke 8 erfolgen kann. Im verjüngten Zapfenteil des auswechselbaren Verstellrades 10 sind Gewinde 14 vorgesehen, mit denen ein Zeiger 21 befestigt wird (siehe Fig. 1). Ebenfalls in Fig. 1 ist erkennbar, daß der Zeiger 21 mit einem am Gehäuse 11 befestigten Formstück 22 zusammenarbeitet. Aus der Stellung des Zeigers 21 relativ zum Formstück 22 kann bei entsprechender Zeigerstellung die Stellung der Spannwelle 3 zur Aufnahme eines Aufzuges bzw. die Spannstellung der Spannwellen 3 - falls mehrere vorgesehen sind - abgelesen werden.

Im in Fig. 4 dargestellten Längsschnitt durch das auswechselbare Verstellrad 10 ist neben einem Gewinde 14 auch ein Schnitt durch die Bohrung wiedergegeben, welche den Zapfen 17 der Spannwelle 3 aufnimmt. In der Bohrung ist die Aufnahmeöffnung 15 für einen verdickten Tragkörper 13 dargestellt, sowie weitere Aufnahmeöffnungen 16 am Umfang, in welche die schlanken Tragkörper 12 eingeklebt werden. Zur Erzielung eines möglichst geringen seitlichen Entkupplungsweges sind die Tragkörper 12 und 13 in ihrer Länge derart bemessen, daß sie bündig zur Stirnseite in die Bohrung des auswechselbaren Verstellrades 10 eingeklebt sind. Dadurch ist der in die Bohrung des auswechselbaren Verstellrades 10 eingeführte Zapfen 17 bereits nach wenigen Millimetern seitlicher Verschiebung des auswechselbaren Verstellrades 10 frei. Bei Einsatzmöglichkeiten des der Erfindung zugrunde liegenden Gegenstandes, bei denen der Entkupplungsweg von untergeordneter Bedeutung ist, können die Tragkörper 12 bzw. 13 durchaus in verlängerter Ausführung eingesetzt werden.

Die Ausnehmungen 18 und 19 auf dem Umfang des Zapfens 17 sind dann in ihrer Länge an die der zu verwendenden Tragkörper 12 und 13 anzupassen, falls Kriterien wie die zu übertragende Kraft und die radiale Fixierung der zu kuppelnden Bauteile im Vordergrund stehen.

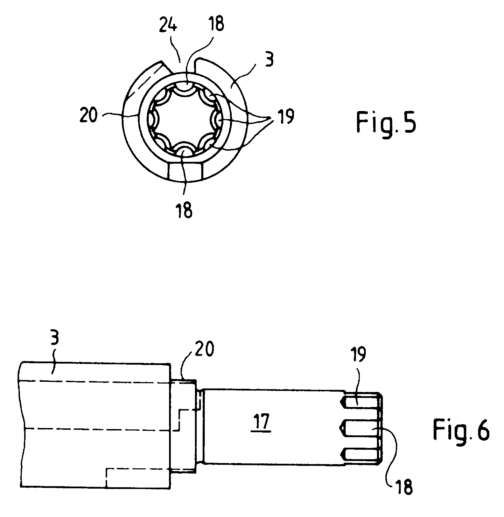

In Fig. 5 ist eine Draufsicht auf den Zapfen einer Spannwelle dargestellt. Auf dem Umfang des Zapfens 17 der Spannwelle 3 sind einander gegenüberliegend Ausnehmungen 18 ausgebildet, welche die verdickt ausgeführten Tragkörper 13 aufnehmen. Entsprechend greifen bei Montage des äußeren Kupplungsteils - des auswechselbaren Verstellrad 10 - die dort befestigten Tragkörper 12 in die Ausnehmungen 19 des Zapfens 17 ein. Hinter dem mit Anphasungen versehenen Zapfen 17 befindet sich ein Absatz 20, an welchen sich der Abschnitt der Spannwelle 3 anschließt, in dem die Enden eines Zylinderaufzuges aufgenommen sind.

Fig. 6 schließlich zeigt eine Seitenansicht von Spannwelle und Zapfen. Wie aus dieser Figur hervorgeht, können die Ausnehmungen 18 und 19 in ihrer axialen Erstreckung durchaus auf die gesamte Länge des Zapfens 17 der Spannwelle 3 ausgedehnt werden, um längere Tragsegmente 12 bzw. 13 aufzunehmen.

### TEILELISTE

- 1: Zylinder
- 2: Axialbohrung
- 3: Spannwelle
- 4: Schmitzring
- 5: Schraube
- 6: Zylinderzapfen
- 7: Absatz
- 8: Schnecke
- 9: Aufsatzstück
- 10: Verstellrad
- 11: Gehäuse
- 12: Tragkörper
- 13: Tragkörper
- 14: Gewinde
- 15: Aufnahmeöffnung
- 16: Aufnahmeöffnung
- 17: Zapfen
- 18: Ausnehmungen
- 19: Ausnehmungen
- 20: Absatz
- 21: Zeiger
- 22: Formstück
- 23: Lagerteil
- 24: Aufnahmeschlitz
- 25: Verzahnung

## Patentansprüche

1. Einrichtung zum Übertragen von Spannkräften auf Spannwellen in Druckwerkzylindern, insbesondere an Rotationsdruckmaschinen, deren Druckwerkzylinder flächige, flexible Aufzüge führen, wobei deren Vorder- oder Hinterkanten in einer sich über die Breite des Druckwerkzylinders erstreckenden Öffnung für eine Spannwelle aufgenommen sind,
**dadurch gekennzeichnet**,
daß am Umfang einer Bohrung eines auswechselbaren Verstellrades (10) angeordnete Tragkörper (12, 13) unterschiedlicher Abmessungen in Ausnehmungen (18, 19) eines Zapfens (17) einer Spannwelle (3) eingreifen.

2. Einrichtung gemäß Anspruch 1,
**dadurch gekennzeichnet**,
daß am Umfang des Zapfens (17) die Ausnehmungen (18, 19) jeweils gleicher Abmessungen bezogen auf die Symmetrieachse des Zapfens (17) einander gegenüberliegend angeordnet sind.

3. Einrichtung gemäß Anspruch 1,
**dadurch gekennzeichnet**,
daß sich in der Bohrung des auswechselbaren Verstellrades (10) Aufnahmeöffnungen (15, 16) für die Tragkörper (12, 13) bis an die zapfenseitige Stirnseite des auswechselbaren Verstellrades (10) erstrecken.

4. Einrichtung gemäß Anspruch 1,
**dadurch gekennzeichnet**,
daß die Tragkörper (12, 13) als Zylinderstifte ausgeführt sind.

5. Einrichtung gemäß den Ansprüchen 1 und 4,
**dadurch gekennzeichnet**,
daß als Zylinderstifte ausgebildete Tragkörper (12, 13) in die Aufnahmeöffnungen (15, 16) des auswechselbaren Verstellrades (10) eingeklebt sind.

6. Einrichtung gemäß Anspruch 1,
**dadurch gekennzeichnet**,
daß die Tragkörper (12, 13) als Paßfedern ausgeführt sind.

7. Einrichtung gemäß Anspruch 1,
**dadurch gekennzeichnet**,
daß das Ende des Zapfens (17) der Spannwelle (3) als Mehrkeilwelle ausgebildet ist.

8. Einrichtung gemäß Anspruch 1,
**dadurch gekennzeichnet**,
daß das auswechselbare Verstellrad (10) in einem Lagerteil (23) aufgenommen ist.

9. Einrichtung gemäß Anspruch 1
**dadurch gekennzeichnet**,
daß durch ein Formstück (22) und einen am Ende des Zapfens (17) befestigten Zeiger (21) die Einsatz- und Spannposition angezeigt werden kann.

## Claims

1. Apparatus for transmitting tension forces to tensioning shafts in printing unit cylinders, in particular to rotary printing machines whose printing unit cylinders bear flat, flexible coverings, their leading or trailing edges being received in an opening for a tensioning shaft extending over the width of the printing unit cylinder, characterized in that bearing bodies (12, 13) of different dimensions, arranged on the circumference of a bore of an exchangeable adjusting wheel (10), engage in recesses (18, 19) of a journal (17) of a tensioning shaft (3).

2. Apparatus according to Claim 1, characterized in that the recesses (18, 19) in each case of the same dimensions are arranged on the circumference of the journal (17) opposite one another relative to the axis of symmetry of the journal (17).

3. Apparatus according to Claim 1, characterized in that receiving openings (15, 16) for the bearing bodies (12, 13) extend in the bore of the exchangeable adjusting wheel (10) up to the journal-side end face of the exchangeable adjusting wheel (10).

4. Apparatus according to Claim 1, characterized in that the bearing bodies (12, 13) are designed as cylindrical pins.

5. Apparatus according to Claims 1 and 4, characterized in that bearing bodies (12, 13) designed as cylindrical pins are bonded into the receiving openings (15, 16) of the exchangeable adjusting wheel (10).

6. Apparatus according to Claim 1, characterized in that the bearing bodies (12, 13) are designed as feather keys.

7. Apparatus according to Claim 1, characterized in that the end of the journal (17) of the tensioning shaft (3) is designed as a multi-wedge shaft.

8. Apparatus according to Claim 1, characterized in that the exchangeable adjusting wheel (10) is received in a bearing part (23).

9. Apparatus according to Claim 1, characterized in that the insertion and tensioning position can be displayed by a shaped piece (22) and an indicator (21) fastened to the end of the journal (17).

## Revendications

1. Dispositif pour transmettre des forces de tension à des arbres de tension dans des cylindres de groupes imprimants, notamment sur des machines à imprimer rotatives, dont les cylindres de groupes imprimants portent des revêtements de grande surface et souples, dont les bords avant ou arrière sont logés dans une ouverture recevant un arbre de tension et qui s'étend sur toute la largeur du cylindre du groupe imprimant,
caractérisé
en ce que des corps porteurs (12, 13) disposés à la circonférence d'un perçage d'une roue de réglage interchangeable (10), et présentant des dimensions différentes, sont engagés dans des évidements (18, 19) d'un tourillon (17) d'un arbre de tension (3).

2. Dispositif selon la revendication 1,
caractérisé
en ce que, sur la circonférence du tourillon (17), les évidements (18, 19) de même dimension sont disposés les uns à l'opposé des autres par rapport à l'axe de symétrie du tourillon (17).

3. Dispositif selon la revendication 1,
caractérisé
en ce que, dans le perçage de la roue de réglage interchangeable (10), s'étendent des ouvertures de logement (15, 16) destinées à recevoir des corps porteurs (12, 13) jusqu'à la face frontale du côté tourillon de la roue de réglage interchangeable (10).

4. Dispositif selon la revendication 1,
caractérisé
en ce les corps porteurs (12, 13) sont réalisés sous la forme de goupilles cylindriques.

5. Dispositif selon les revendications 1 et 4,
caractérisé
en ce que des corps porteurs (12, 13) réalisés sous la forme de goupilles cylindres sont collés dans les ouvertures de logement (15, 16) de la roue de réglage interchangeable (10).

6. Dispositif selon la revendication 1,
caractérisé
en ce que les corps porteurs (12, 13) sont constitués par des clavettes.

7. Dispositif selon la revendication 1,
caractérisé
en ce que l'extrémité du tourillon (17) de l'arbre de tension (3) est réalisée sous la forme d'un arbre à clavettes multiples.

8. Dispositif selon la revendication 1,
caractérisé
en ce que la roue de réglage interchangeable (10) est logée dans un élément de palier (23).

9. Dispositif selon la revendication 1,
caractérisé
en ce que la position d'utilisation et de tension peut être indiquée par un élément de forme (22) et une aiguille (21) fixée à l'extrémité du tourillon (17).
